(19) Europäisches Patentamt
European Patent Office
Office européen des brevets

(11) Numéro de publication: **0 117 768**
**B1**

(12) **FASCICULE DE BREVET EUROPÉEN**

(45) Date de publication du fascicule du brevet: **17.12.86**

(21) Numéro de dépôt: **84400048.9**

(22) Date de dépôt: **10.01.84**

(51) Int. Cl.[4]: **C 08 G 18/48**, C 08 G 18/08, C 08 G 18/78, C 08 G 18/80, C 08 G 18/66, G 02 C 7/04

(54) **Hydrogels de polyuréthane et leur procédé de fabrication.**

(30) Priorité: **11.01.83 FR 8300309**

(43) Date de publication de la demande: **05.09.84 Bulletin 84/36**

(45) Mention de la délivrance du brevet: **17.12.86 Bulletin 86/51**

(84) Etats contractants désignés: **CH DE GB IT LI SE**

(56) Documents cité:
**EP-A-0 016 652**
**EP-A-0 052 915**
**FR-A-2 275 494**

(73) Titulaire: **ESSILOR INTERNATIONAL Cie Générale d'Optique, 1 Rue Thomas Edison Echat 902, F-94028 Creteil Cedex (FR)**

(72) Inventeur: **Gnanou, Yves, 29 Avenue de la Forêt Noire, F-67000 Strasbourg (FR)**
Inventeur: **Hild, Gérard, 33 rue de Neufeld, F-67100 Strasbourg (FR)**

(74) Mandataire: **Thibon- Littaye, Annick, Cabinet A. THIBON- LITTAYE 11 rue de l'Etang, F-78160 Marly- le- Roi (FR)**

**EP 0 117 768 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1986

## Description

L'invention résulte de travaux de recherches effectués au Centre de Recherches sur les Macromolécules de Strasbourg (CNRS). Elle concerne la composition et la préparation des gels gonflables à l'eau, et plus particulièrement celles des gels de ce type, ou hydrogels, qui sont susceptibles de se présenter sous une forme amorphe, transparente.

Les hydrogels transparents présentent une grande utilité en ophtalmologie, dans la fabrication des lentilles de contact. Mais, cette application, spécialement avantageuse, n'est pas pour autant la seule de ces matériaux.

L'invention s'est intéressée tout spécialement à la mise au point d'hydrogels combinant un gonflement à l'eau important avec de bonnes propriétés mécaniques, qui soient en outre compatibles avec les tissus biologiques, de manière à pouvoir être utiliés; avec profit dans diverses applications médicales, notamment en obstétrique, en ophtalmologie, et comme insert destiné à relarguer progressivement un médicament préalablement incorporé dans le gel. La possibilité l'obtenir des hydrogels transparents, d'une manière contrôlée et reproductible, représente un atout supplémentaire, pour les applications comme lentilles de contact, par exemple.

Dans cette optique, l'invention propose des gels gonflant à l'eau, à base de polyuréthanes, qui sont préparés selon une technique spéciale. Par leur nature chimique, ils bénéficient déjà de la compatibilité avec les tissus biologiques et d'un faible retrait en cours de fabrication, pendant la polymerisation des constituants de départ, mais en outre, la technique spéciale proposée permet d'accroître le taux de gonflement des gels à l'équilibre dans l'eau pour de bonnes propriétés mécaniques, de combiner ces qualités dans des gels transparents, de faciliter la production de ces gels sous forme de pièces de dimensions déterminées, et d'assurer une bonne reproductibilité dans la forme, les dimensions, la transparence, et d'une manière générale dans la structure et les propriétés des produits obtenus.

L'invention a ainsi pour objet un hydrogel de polyuréthane, caractérisé en cé qu'il est constitué par un polyuréthane de polyoxyéthylène obtenu par une reaction de reticulation par un isocyanate polyfonctionnel, effectuee sur le polyoxyéthylène en solution dans un solvant non aqueux.

Elle a aussi pour objet un procédé de fabrication d'hydrogels, caractérisé en ce que l'on assure la réticulation de polyoxyéthylène par un polyisocyanate en opérant dans un milieu solvant non aqueux du polyoxyéthylène, sensiblement non réactif à l'égard du polyisocyanate.

Les polyoxyéthylènes sont des polymères de poids moléculaires variables, contenant le motif répétitif $-CH_2 - CH_2O-$, résultant de la polymérisation de l'éthanal ou de l'addition d'un composé à hydrogène actif sur l'oxydé d'éthylène. Ils renferment des fonctions réactives, le plus souvent des fonctions alcool, sur lesquelles viennent se condenser les groupes isocyanate $- N = CO$ des polyisocyanates en formant des groupesuréthane $- O - CO - NH -$.

D'une manière générale, les constituants intervenant dans la formation du matériau polymérique constituant le gel, peuvent être choisis en fonction des connaissances que possèdent les chimistes sur les réactions de polymérisation et de réticulation par les isocyanates polyfonctionnels, mis en présence d'un polymère initial porteur de groupes hydroxyle libres. Il est notamment connu que la réticulation demande que les constituants présentent des fonctionnalités différentes, l'un en nombre de fonctions alcool par molécule, l'autre en nombre de fonctions isocyanate. De même, l'isocyanate utilisé comporte au moins deux fonctions $- N = CO$, avantageusement sur un radical aliphatique d'au moins 4 atomes de carbone ou sur un radical aromatique.

Dans un mode de mise en oeuvre préféré, on utilise un triisocyanate, de type aliphatique ou aromatique, et un polyoxyéthylène contenant au moins deux hydroxyles par molécule. L'exemple le plus courant est alors le polyoxyéthylène bifonctionnel qui résulte de l'addition d'oxyde d'éthylène et d'éthylène-glycol. Si, en variante, on utilise le même polyoxyéthylène avec un diisocyanate, il est alors souhaitable d'ajouter au mélange un triol, en tant qu'agent de réticulation.

On doit comprendre, par ailleurs, que si le polyoxyéthylène est un constituant de base préféré pour la fabrication des hydrogels selon l'invention, il peut lui être adjoint d'autres composés, notamment d'autres polyoxyalkylènes formant avec lui des copolymères, en une proportion mineure, qui ne dépassera en général pas 20% en poids.

D'autre part, on peut incorporer au mélange soumis à la réaction des catalyseurs choisis selon des critères classiques pour favoriser la réticulation, et la proportion de polyisocyanate est avantageusement déterminée par rapport à la quantité de polyoxyéthylène de base pour se rapprocher au mieux de la stoechiométrie.

Conformément à l'invention, la réaction entre le polyoxyéthylène et le polyisocyanate est effectuée dans un milieu solvant non aqueux, choisi de préférence dans les composés dépourvus de fonctions amine ou alcool, qui pourraient réagir avec les isocyanates. Ce peut être notamment un solvant miscible à l'eau tel que le diméthylformamide, la méthylpyrrolidone, le dioxanne ou un solvant non miscible à l'eau comme l'acétate d'éthyle ou le dichloréthane. On opère avantageusement en l'absence complète d'eau et sous atmosphère inerte.

Il est clair de ce qui précède que la réaction effectuée en milieu solvant conduit à un gel gonflé par le solvant. Il suffit ensuite soit de déplacer le solvant par de l'eau, soit d'évaporer le solvant pour amener le gel à l'état sec et le

mettre ensuite en présence d'eau, pour obtenir un hydrogel plus ou moins gonflé d'eau, convenant aux applications envisagées. En général, le taux de gonflement à l'équilibre par l'eau est sensiblement le même que par le solvant.

Dans des conditions de mise en oeuvre particulières préférées de l'invention, le polyoxyéthylène présente un poids moléculaire compris entre 500 et 20 000, avec une préférence pour des poids moléculaires moyens compris entre 1000 et 10 000, et l'on réalise la réaction de réticulation sous gaz inerte, à chaud, soit notamment à une température comprise entre 40° C et 90° C. La quantité de solvant utilisée peut être très variable, généralement telle que la concentration de polyoxyéthylène dans le mélange soit comprise entre 5 et 80 % en poids. On obtient par exemple des produits satisfaisants pour des concentrations en polyoxyéthylène de l'ordre de 20 et 50 % en poids alors que la quantité de solvant présente pendant la fabrication du gel est très nettement inférieure à celle que le gel est capable de retenir à l'etat de gonflement à l'équilibre. Mais il sera souvent préférable, pour des raisons pratiques, de travailler à volume constant et d'utiliser précisément la quantité de solvant absorbée par le gel à l'état gonflé, dans les conditions normales d'emploi, de manière à obtenir en moule un produit directement formé aux dimensions désirées. La concentration en POE est alors comprise par exemple entre 5 et 40 % en poids, de préférence entre 7 et 20 % en poids, et fixée à une valeur qui est déterminée au préalable, d'après les proprietes du gel préparé, suivant la nature et les proportions des constituants.

On a en outre constaté que l'on a en général intérêt à combiner ensemble au moins deux polyoxyéthylènes différant par leur poids moléculaire. Il semble que les meilleurs produits sont obtenus en partant d'un mélange de poids moléculaire moyen compris entre 2000 et 8000, formé de deux polyoxyéthylènes de poids moléculaires respectifs compris entre 1000 et 6000 et entre 4000 et 10 000, avec de préférence un écart relativement faible entre les deux poids moléculaires, par exemple un écart de l'ordre de 1000 à 5000.

Il est remarquable que le procédé selon l'invention permet aussi d'obtenir des gels qui sont transparents, qui restent transparents lorsque le solvant qui les imprègne est ensuite échangé pour de l'eau, et qui ne se détruisent pas quand ils sont séchés, alors que si la même réaction est effectuée entre les mêmes constituants mais en masse, sans solvant, on obtient des produits opaques, qui à l'état gonflé, restent plus ou moins opaques suivant leur épaisseur, mais trop opaques pour certaines applications.

De plus, on obtient par l'invention des gels de bonne résistance mécanique, qui présentent une meilleure capacité de rétention d'eau, avec taux de gonflement qui peuvent dépasser 90 % en poids (poids d'eau par rapport au poids total du gel gonflé).

L'invention sera maintenant illustrée par des exemples particuliers de mise en oeuvre, qui n'ont bien entendu aucun caractère limitatif. On commencera par quelques données générales communes aux différents exemples.

Les matériaux réticulés selon l'invention sont obtenus dans ces exemples, à partir de réactions de polycondensation:

- soit entre un diol, le polyoxyéthylène (POE) $HO-(CH_2-CH_2O)_n-H$, et des triisocyanates, en particulier un triisocyanate aliphatique, connu sous la dénomination commerciale: Desmodur N 75, et un triisocyanate aromatique, connu sous la dénominaton commerciale: Desmodur L. Les formules avancées par le fabricant pour ces produits sont les suivantes:

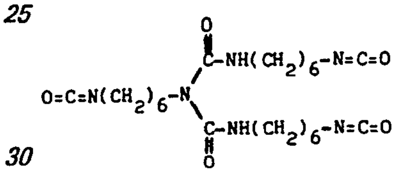

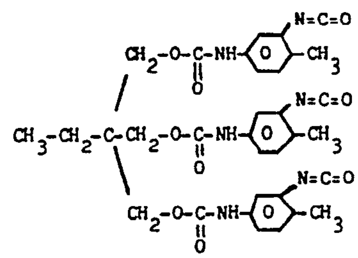

DESMODUR N 75 DESMODUR L

- soit entre un mélange de ce diol avec un triol, constitué ici par le triméthylolpropane à titre d'exemple, et un diisocyanate, en particulier le diisocyanate d'hexaméthylène (HMDI), les formules etant les suivantes:

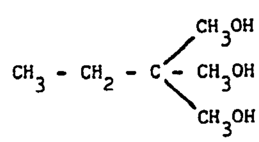

$O = C = N -(CH_2)_6-N=C=O$

TMP(triméthylolpropane) HMDI

<u>Purification des réactifs</u>:

. Les polyoxyéthylènes (POE), de la Société HOECHST, qui sont utilisés possèdent des masses moléculaires moyennes s'échelonnant de 1000 a 10 000 environ. Ces polymères ont été purifiés soit par distillation pour les échantillons dont le degré de polymérisation est inférieur à 15, soit par précipitation de leur solution benzénique par un mélange éther éthyliqueéther de pétrole à basse température, en général 10° C. Les produits obtenus sont séchés sous vide à température ambiante jusqu'à poids constants.

. Le triol utilisé, de la Société BAYER, est le

triméthylolpropane. Il se presente sous forme solide et est purifié de manière identique à celle des POE de degré moyen de polymérisation supérieur à 15.

. Le Desmodur N 75 et le Desmodur L sont des produits de la Société BAYER. Leurs formules "idéalisées" données au paragraphe précédent laissent supposer une fonctionnalité égale à 3. Ils sont utilisés sans autre purification mais en étant maintenus sous argon dans une ampoule adéquate afin que le pourcentage de fonctions -N = C = O n'évolue pas au cours du temps.

. Le diisocyanate d'hexaméthylène (HMDI) a été distillé sous pression réduite (13 mm Hg) et conservé sous argon au réfrigérateur.

. Les solvants utilisés (à l'exception des alcools et des solvants aminés) sont en particulier la diméthylformamide (DMF), la N.méthylpyrrolidone, l'acétate d'éthyle, le xylène, le THF (tétrahydrofurane), le dichloroéthane. Ces solvants sont distillés deux fois jusqu'à être rendus totalement anhydres. Ils sont conservés, après distillation, sous argon.

Le solvant qui a été utilisé le plus généralement est le dioxanne. Il a été placé sur potasse puis distillé sur fil de sodium. A partir d'une solution de naphthalène-sodium, le dioxanne est finalement distillé dans une ampoule adaptable au ballon de réaction ($E_b$ = 101° C à pression normale).

Dosage des réactifs:

. Polyoxyéthylène (POE) et triol

Un dosage chimique précis des groupements -OH terminaux a été effectué en 2 étapes. Après réaction de l'alcool sur le phosgène, on procède à une hydrolyse ménagée du chloroformiate en présence de KOH méthanolique. Le dosage du chlore présent sous forme de chlorure de potassium s'effectue par addition d'une solution de nitrate d'argent de titre connu. On en déduit l'indice d'hydroxy, le pourcentage de fonctions alcool et finalement la masse moléculaire moyenne en nombre $\bar{M}_n$ du POE, et celle du TMP. Le tableau résume l'ensemble des résultats obtenus:

| Dénomination industrielle | Indice d'hydroxy | OH % | $\bar{M}_n$ |
|---|---|---|---|
| POE 1000 | 111 | 3,37 | 1010 |
| 2000 | 62 | 1,88 | 1810 |
| 4000 | 33 | 1,00 | 3400 |
| 6000 | 20 | 0,60 | 5650 |
| 10 000 | 13,5 | 0,41 | 8250 |
| Triméthyl-ol-propane M = 134 | 1100 | 33,20 | 150 |

. Desmodur N 75 et Desmodur L

Les produits ont été dosés après réaction sur la dibutylamine dont on titre l'excès par une solution de HCl 0,5 N. Pour le Desmodur N 75 on trouve que le pourcentage de-N = C = O est de 16,68% et pour le Desmodur L, on trouve 10,85%. Ces résultats impliquent que pour les produits utilisés la fonctionnalité moyenne des Desmodurs ne correspond pas exactement aux formules idéalisées citées précédemment. Elle serait de l'ordre de 4 à 5.

**Mode opératoire - Exemples 1 à 8**

La réaction de polycondensation s'effectue dans un ballon comprenant 5 rodages.

Le POE préalablement purifié est lyophilisé directement dans le ballon de réaction à partir d'une solution benzénique pour éliminer toute trace d'eau.

Quand la réaction ne s'effectue pas en masse, le solvant (ici dioxanne), introduit par une ampoule, est ajouté sous argon dans le ballon qui est lui-même placé dans un bain thermostaté. La température est comprise entre 40° C et 90° C, et de préférence de l'ordre de 60° C à 80° C. L'agent de réticulation est additionné sous agitation au milieu réactionnel, sous pression d'argon, en quantité stoechiométrique (c'est-à-dire que le rapport NCO/OH est égal à 1, en présence ou non de catalyseur).

Un prélèvement est alors effectué dans un tube en verre contenant un cylindre en polypropylène (afin de rendre plus aisé le démoulage du matériau). Ce tube, fermé par un robinet, pour le préserver de l'air ambiant est scellé sous vide poussé après deux dégazages successifs. Le tube

scellé est placé dans un bain thermostaté à la température choisie (en général 60° C) et pendant une durée également choisie (en général 10 jours).

Toutes les manipulations effectuées depuis le début du procédé, le sont à l'abri total de l'air ambiant. De plus, le mode opératoire qui vient d'être décrit, s'applique à l'ensemble des échantillons de POE aussi bien avec les Desmodur N 75 et Desmodur L qu'avec le mélange constitué par 1'HMDI et le TMP.

**Exemple 1**

Composition stoechiométrique du mélange réactionnel:
. POE 10 000..... 10 g
. Desmodur N 75..... 0,61 g
. Solvant Dioxanne.. 40 ml
. Concentration POE. 20%
. Température..... 60° C
. Pas de catalyseur

**Exemple 2**

Composition stoechiométrique du mélange réactionnel:
. POE 2000..... 20 g
. Desmodur N 75..... 5,6 g
. Solvant Dioxanne.. 80 ml
. Concentration POE. 20%
. Température..... 60° C
. Pas de catalyseur

**Exemple 3**

Composition stoechiométrique du mélange réactionnel:
. POE 10 000 ..... 10 g
. Desmodur N 75..... 0,61 g
. Solvant Dioxanne.. 10 ml
. Concentration POE. 50% en poids
. Température..... 60° C
. Pas de catalyseur

**Exemple 4**

Composition stoechiométrique du mélange reactionnel:
. POE 2000..... 20 g
. Desmodur N 75..... 5,6 g
. Solvant Dioxanne.. 20 ml
. Concentration POE. 50% en poids
. Température..... 60° C
. Pas de catalyseur

**Exemple 5**

Composition stoechiométrique du mélange réactionnel:
. POE 6000..... 6 g
. Desmodur N 75..... 0,53 g
. Solvant Dioxanne.. 12 ml
. Concentration POE. 33% en poids
. Température..... 60° C
. Catalyseur (diazabicyclooctane ou DABCO, triéthylamine, octoate stanneux, à raison de 0,1% à 60° C)
DABCO..... 6 mg

Le point de gel apparaît plus tôt que lorsqu'on n'emploie pas de catalyseur (6h au lieu de 22h).

**Exemple 6**

Composition stoechiométrique du mélange reactionnel:
. POE 6000..... 6 g
. Desmodur N 75..... 0,53 g
. Solvant Dioxanne.. 12 ml
. Concentration POE. 33% en poids
. Température..... 80° C
. Pas de catalyseur

Le point de gel apparaît plus totque lorsqu'on effectue l'expérience à 60° C (5h30 au lieu de 22h).

**Exemple 7**

Composition stoechiométrique du mélange réactionnel:
. POE 2000..... 20 g
. Desmodur L..... 8,55 g
. Solvant Dioxanne.. 40 ml
. Concentration POE.. 33% en poids
. Température..... 60° C
. Pas de catalyseur

**Exemple 8**

Composition stoechiométrique du mélange réactionnel
. POE 2000..... 20 g
. TMP.... 1 g
. HMDI... 3 7 g
. Solvant Dioxanne.. 40 ml
. Concentration POE. 33% en poids
. Température..... 60° C
. Pas de catalyseur

Dans tous les exemples qui précédent, le matériau obtenu est transparent lorsqu'il est gonflé à l'équilibre dans le dioxanne. Il reste transparent lorsque le dioxanne est échangé avec l'eau.

De ce fait, usiné ou moulé à la forme appropriee il constitue des lentilles de contact de

très bonne qualité.

A titre de comparaison, on a utilisé les mêmes compositions que dans les exemples 4 et 6, mais en operant la réaction en masse, sans aucun solvant. On a alors obtenu un matériau qui est opaque lorsqu'il est gonflé à l'équilibre dans le dioxanne, et qui reste opaque lorsque le dioxanne est échangé avec de l'eau.

**Exemple 9**

Sur des materiaux obtenus conformement à l'invention, en réalisant la réticulation en milieu solvant suivant le mode opératoire détaillé précédemment, on a effectué des mesures de gonflement à l'équilibre et de module d'élasticité. Les gels étaient examinés après extraction de leurs fractions solubles dans le tétrahydrofuranne à chaud et les mesures étaient repetées après des échanges successifs, dans le dioxanne et dans l'eau.

Pour ces échanges, le produit obtenu dans le dioxanne est laissé à tremper dans un bain d'eau pendant 3 semaines. Deux ou trois fois par semaine, on augmente la quantité d'eau en remplaçant par de l'eau fraîche le bain précédent qui s'est chargé en dioxanne. L'échange de l'eau par du dioxanne s'effectue de manière similaire.

La capacité de rétention de dioxanne et d'eau est exprimée ci-après par la teneur en poids dans le gel gonflé à l'équilibre, pour des gels préparés à diverses concentrations de POE dans le solvant et à partir de POE de divers poids moléculaires moyens, toujours dans le dioxanne à 60° C:

Des résultats similaires sont obtenus si le dioxanne est remplacé par un autre solvant, en particulier le diméthylformamide, la N-méthylpyrrolidone, le tétrahydrofuranne, l'acétate d'éthyle ou le dichloroéthane.

A supposer que le solvant soit par exemple le dichloroéthane, c'est-à-dire un solvant non miscible à l'eau, le gel gonflé par ce solvant extrait du tube scellé en fin de réaction est tout d'abord amené à l'état sec par évaporation du solvant en étuve, jusqu'à ce que le poids du gel reste constant. On met alors le gel sec en présence d'eau, en augmentant progressivement la quantité d'eau dans laquelle il baigne jusqu'à l'état de gonflement à l'équilibre. Le gel peut être découpé à toute forme appropriée de manière usuelle.

**Exemple 10**

Les mêmes mesures que dans l'exemple 9 ont été effectuées sur des gels préparés à partir de mélanges binaires de POE de poids moléculaires différents, présents dans des proportions telles que chacun apporte le même nombre de fonctions OH dans le mélange. La réticulation était effectuée à 60° C dans le dioxanne, à la concentration de 33 % en poids.

| | Dioxanne % poids | Eau % poids | Module $E_G$ dans l'eau | Extractibles % poids |
|---|---|---|---|---|
| Concentration POE : | | | | |
| 20% en poids | | | | |
| POE 1000 | 85 | 80,9 | $1,58.10^6$ | 2,11 |
| POE 2000 | 86,4 | 83,9 | $1,09.10^6$ | 2,12 |
| Concentration de POE : | | | | |
| 33% en poids | | | | |
| POE 2000 | 85,5 | 82 | $1,27.10^6$ | 1,29 |
| POE 4000 | 91,3 | 92,2 | $2,98.10^5$ | 1,5 |
| POE 6000 | 91 | 92,3 | $2,15.10^5$ | 2,2 |
| Concentration de POE : | | | | |
| 50% en poids | | | | |
| POE 2000 | 79 | 77 | $2,33.10^6$ | 0,5 |
| POE 4000 | 88 | 88,6 | $6,38.10^5$ | 1,7 |
| POE 6000 | 89 | 91 | $3,45.10^5$ | 1,82 |

Les résultats sont rapportés ci-après:

| POE | Poids molécul moyen | Dioxanne % poids | Eau % poids | Module $E_G$ dans l'eau | Extractibles % poids |
|---|---|---|---|---|---|
| 1000 et 2000 | 1500 | 80,6 | 76,2 | $1,85.10^6$ | 1,7 |
| 2000 et 4000 | 3000 | 86,1 | 85 | $9,69.10^5$ | 1,19 |
| 4000 et 6000 | 5000 | 88,7 | 88,8 | $5,58.10^5$ | 1,48 |
| 6000 et 10000 | 8000 | 89,4 | 93,2 | $5,01,10^5$ | 1,05 |
| 1000 et 4000 | 2500 | 86,7 | 87,4 | $9,01.10^5$ | 0,95 |
| 2000 et 6000 | 4000 | 89,5 | 91,7 | $5,30.10^5$ | 1,31 |

**Exemple 11**

Les mêmes mesures effectuées sur un gel préparé à partir de la composition de l'exemple 5, mais avec une durée de réaction limitée à 2 jours, ont fourni les résultats suivants:

| | | |
|---|---|---|
| Teneur en dioxanne | % poids | 86,5 |
| Module d'élasticité dans le dioxanne | $E_G$ | $1,15.10^6$ |

Pour une température de réaction de 50° C, le point de gel apparaît après 11 heures (au lieu de 6 heures à 60° C). Pour une durée de réaction de 4 jours, on obtient

| | | |
|---|---|---|
| Teneur en dioxanne | % poids | -89,5 |
| Module d'élasticité dans le dioxanne | $E_G$ | $2,43.10^5$ |

Sur les gels préparés selon l'exemple 6, donc sans catalyseur mais à 80° C, on a obtenu les résultats suivants:

| Durée de réaction : | | 24 h | 7 jours |
|---|---|---|---|
| Teneur en dioxanne | % poids | 91,4 | 89,5 |
| Module d'élasticité dans le dioxanne | $E_G$ | $3,0.10^5$ | $5,84.10^5$ |

**Exemple 12**

Les gels peuvent être préparés par moulage directement à la forme et aux dimensions désirées, pour l'emploi auquel ilssont destinés. On prépare alors un mélange réactionnel, contenant par exemple une concentration de 15% en poids de POE dans le dioxanne, en utilisant un mélange de POE de poids moléculaire adapté, en fonction d'expérimentations préalables, pour conduire à un gel capable d'absorber une teneur en liquidede 85% du poids total à l'équilibre.

Après addition de l'agent de réticulation, le mélange est utilisé pour remplir des moules étanches, dans lesquels on laisse la réaction se poursuivre pendant 10 jours à la température de 70° C. Le gel se forme en absorbant tout le solvant présent et en occupant tout le volume des moules. Après démoulage, le solvant est échangé pour de l'eau comme on l'a déjà décrit.

L'ensemble des exemples donnés ci-dessus confirme que le procédé de l'invention permet d'obtenir des hydrogels transparents qui, à l'équilibre de gonflement dans l'eau, contiennent de 30 à 99 %, et de préférence de 60 à 95 % en poids d'eau, et présentent un module d'élasticité de l'ordre de $10^5$ à 3.10° dyne/$cm^2$. Pour des gels tyoiques capables de retenir de 70 à 97 % en poids d'eau, le taux de matière extractible susceptible de passer en solution dans l'eau est inférieur à 5% en poids dans tous les cas, et

généralement inférieur à 3 % en poids.

Mais naturellement, l'invention n'est en rien limitée par les conditions particuliéres précisées dans le cadre des exemples qui ont été spécialement décrits.

**Revendications**

1. Hydrogel de polyuréthane, caractérisé en ce qu'il est constitué par un polyuréthane de polyoxyéthylène obtenu par une réaction de réticulation par un isocyanaté polyfonctionnel, effectuée sur le polyoxyéthylène en solution dans un solvant non aqueux.

2. Hydrogel selon la revendication 1, caractérisé en ce que le polyoxyéthylène présente deux fonctions alcool par molécule, l'isocyanate polyfonctionnel étant alors un triisocyanate,

3. Hydrogel selon la revendication 1, caractérisé en ce qu'il est produit à partir d'une composition comprénant un polyoxyéthylène présentant deux fonctions alcool par molécule, un diisocyanate et un agent de réticulation constitué par un triol.

4. Hydrogel selon la revendication 1, 2 ou 3, caractérisé en ce qu'il est transparent et contient de 30 à 99%, et de préférence de 60 à 95% envolume d'eau à son équilibre de gonflement dans l'eau, et en ce qu'il présente alors un module d'élasticité de l'ordre de $10^5$ à $3.10^6$ dyne/$cm^2$.

5. Procédé de fabrication d'un hydrogel selon l'une quelconque des revendications 1 à 4, caractérisé en ce que l'on assure la réticulation du polyoxyéthylène par le polyisocyanate, en opérant dans un milieu solvant non aqueux du polyoxyéthylène, sensiblement non réactif à l'égard du polyisocyanate.

6. Procédé selon la revendication 5, caractérisé en ce qu'il comporte ensuite le gonflement du gel par de l'eau en remplacement du solvant.

7. Procédé selon la revendication 5, caractérisé en ce que le polyoxyéthylène présente un poids moléculaire compris entre 500 et 20 000, avec une préférence pour des poids moléculaires moyens compris entre 1000 et 10 000.

8. Procédé selon la revendication 5, 6 ou 7, caractérisé en ce que la concentration de polyoxyéthylène dans le mélange en solution dans le solvant est comprise entre 5 et 80 % en poids.

9. Procédé selon l'une quelconque des revendications 5 à 8, caractérisé en ce que le solvant est choisi parmi le diméthylformamide, la N-méthylpyrrolidone, le tétrahydrofurane, le dioxanne, l'acétate d'éthyle, le dichloroéthane.

10. Procédé selon l'une quelconque des revendications 5 à 9, caractérisé en ce que le mélange est mis à réagir en moules avec une quantité de solvant correspondant sensiblement à celle qui contient le gel formé à l'état de gonflement à l'équilibre.

11. Articlesconstitués en un hydrogel de polyuréthane présentant les caractéristiques de l'une quelconque des revendications 1 à 4 ou fabriques par le procédé selon l'une quelconque des revendications 5 à 10.

12. Articles selon la revendication 11, réalisés sous forme de lentilles de contact.

**Patentansprüche**

1. Polyurethan-Hydrogel, dadurch gekennzeichnet, daß es besteht aus einem Polyurethan von Polyoxyethylen, letzteres erhalten durch eine Vernetzungsreaktion von einem polyfunktionellem Isocyanat, herbeigeführt über dem in einem nicht-wäßrigen Lösungsmittel gelösten Polyoxyethylen.

2. Hydrogel nach Anspruch 1, dadurch gekennzeichnet, daß das Polyoxyethylen zwei Hydroxylgruppen pro Molekül aufweist und daß das polyfunktionelle Isocyanat dagegen ein Triisocyanat ist.

3. Hydrogel nach Anspruch 1, dadurch gekennzeichnet, daß es hergestellt wird ausgehend von einer Zusammenstellung aus Polyoxyethylen, welches zwei Hydroxylgruppen pro Molekül aufweist, Diisocyanat und einem Vernetzungsagenz, bestehend aus einem Triol.

4. Hydrogel nach Anspruch 1, 2 oder 3, dadurch gekennzeichnet, daß es durchsichtig ist und daß zu 30 bis 99 Vol.-%, vorzugsweise 60 bis 95 Vol.-%, aus Wasser besteht, wobei sich dieser Gehalt durch ein Anquell-Gleichgewicht in Wasser einstellt, und dadurch gekennzeichnet, daß es einen Elastizitätsmodul in der Größenordnung von $10^5$-$3.10^6$ dyn/$cm^2$ aufweist (Si-Dimension: $10^4$-$3,10^5$ N/$m^2$).

5. Verfahren zur Herstellung eines Hydrogels nach wenigstens einem der Ansprüche 1 - 4, dadurch gekennzeichnet, daß man die Vernetzung von Polyoxyethylen durch das Polyisocyanat sichert, indem man in einem nicht-wäßrigen Milieu von Polyoxyethylen arbeitet, das im wesentlichen nicht mit dem Polyisocyanat reagiert.

6. Verfahren nach Anspruch 5, dadurch gekennzeichnet, daß es den Verfahrensschritt umfaßt, nach dem Anquellen des Gels durch Wasser das Lösungsmittel zu ersetzen.

7. Verfahren nach Anspruch 5, dadurch gekennzeichnet, daß das Polyoxyethylen ein Molekulargewicht zwischen 500 und 20.000 aufweist, mit einem bevorzugten Bereich des mittleren Molekulargewichtes zwischen 1.000 und 10.000.

8. Verfahren nach Anspruch 5, 6 oder 7, dadurch gekennzeichnet, daß die Polyoxyethylen-Konzentration in der im Lösungsmittel in Lösung befindlichen Mischung zwischen 5 bis 80 Gew.-% beträgt.

9. Verfahren nach einem der Ansprüche 5 - 8, dadurch gekennzeichnet, daß das Lösungsmittel ausgewählt wird unter Dimethylformamid, N-Methylpyrrolidon, Tetrahydrofuran, Dioxan, Ethylacetat oder Dichlorethan.

10. Verfahren nach einem der Ansprüche 5 bis 9, dadurch gekennzeichnet, daß die Mischung zur Reaktion in Gießformen mit einer Menge an Lösungsmitteln versetzt wird, das im wesentlichen dem entspricht, das das Gel enthält, das beim Gleichgewichts-Anquellen gebildet wird.

11. Gegenstände, bestehend aus Polyurethan-Hydrogel, die die Merkmale entsprechend einem der Ansprüche 1 - 4 zeigen oder die gemäß den Verfahren nach einem der Ansprüche 5 - 10 hergestellt werden.

12. Gegenstände nach Anspruch 11, die in Form einer Kontaktlinse verwirklicht sind.

## Claims

1. Polyurethane hydrogel, characterized in that it is constituted by a polyoxyethylene polyurethane obtained by a reaction of crosslinking with a polyfunctional isocyanate, carried out on the polyoxyethylene in solution in a non-aqueous solvent.

2. Hydrogel according to claim 1, characterized in that the polyoxyethylene contains two alcohol groups per molecule, the polyfunctional isocyanate then being a triisocyanate.

3. Hydrogel according to claim 1, characterized in that it is produced from a composition comprising a polyoxyethylene containing two alcohol groups per molecule, a diisocyanate and a cross-linking agent consisting of a triol.

4. Hydrogel according to claim 1, 2 or 3, characterized in that it is transparent and contains from 30 to 99 % and preferably from 60 to 95 % by volume of water at its swelling equilibrium in water, and that it has in this case an elasticity modulus of the order of $10^5$ to $3.10^6$ dyne/$cm^2$.

5. Process for manufacturing a hydrogel according to any one of claims 1 to 4, characterized in that crosslinking of the polyoxyethylene is produced by the polyisocyanate, the operation being carried out in a non-aqueous solvent medium for polyoxyethylene, which is substantially unreactive towards the polyisocyanate.

6. Process according to claim 5, characterized in that it then comprises the swelling of the gel with water as a replacement for the solvent.

7. Process according to claim 5, characterized in that the polyoxyethylene has a molecular weight between 500 and 20,000, with a preference for average molecular weights between 1,000 and 10,000.

8. Process according to claim 5, 6 or 7, characterized in that the concentration of polyoxyethylene in the mixture dissolved in the solvent is between 5 and 80 % by weight.

9. Process according to any one of claims 5 to 8, characterized in that the solvent is chosen from dimethyl-formamide, N-methyl-pyrrolidone, tetrahydrofuran, dioxan, ethyl acetate, dichloroethane.

10. Process according to any one of claims 5 to 9, characterized in that the mixture is placed to react in moulds with a quantity of solvent corresponding substantially to that which the formed gel contains in the swollen state at equilibrium.

11. Articles consisting of a polyurethane hydrogel having the characteristics of any one of claims 1 to 4 or manufactured by the process according to any one of claims 5 to 10.

12. Articles according to claim 11, produced in the form of contact lenses.